# EUROPEAN PATENT SPECIFICATION

(11) **EP 2 010 810 B1**
(45) Date of publication and mention of the grant of the patent: **19.01.2011**
(21) Application number: 07748028.3
(22) Date of filing: 18.04.2007
(51) Int. Cl.: F16L 21/03, F16L 21/035

(54) **SEALING RING**
DICHTUNGSRING
BAGUE D'ETANCHEITE

(30) Priority: 21.04.2006 SE 0600872
(43) Date of publication of application: 07.01.2009
(73) Proprietor: Trelleborg Forsheda Building AB, 331 29 Värnamo (SE)
(72) Inventor: GUSTAFSSON, Leif, S-331 95 Värnamo (SE)
(74) Representative: Hjalmarsson, Magnus Axel
(86) International application number: PCT/SE2007/000363
(87) International publication number: WO 2007/123459

(56) References cited:
- EP-A- 0 560 104
- EP-A- 1 619 435
- EP-A1- 0 560 104
- EP-A1- 1 619 435
- WO-A-01/38770

## Description

### Field of the Invention

The present invention relates to a sealing ring for sealing an annular gap between an inner face of a socket end of a first tube element and an outer face of a spigot end of a second tube element, the socket end having a circumferential inside groove for receiving the sealing ring, which groove at its bottom has a radius, which due to the manufacturing tolerances of the first tube element is between a minimum value R'min and a maximum value R'max, and the spigot end being concentrically insertable into the socket end to form said gap during compression of the sealing ring, said gap having a radial gap width, which due to the manufacturing tolerances of the two tube elements is between a minimum value Tmin and a maximum value Tmax, which sealing ring has an annular sealing element with a first sealing part for sealing against the inner face of the socket end in the bottom of the circumferential groove and a second sealing part for sealing against the outer face of the spigot end and further has an annular holding element which is connected to the sealing element and which is more rigid than the sealing element but so elastically deformable as to allow insertion of the sealing ring into the groove.

### Background Art

A sealing ring of this type is elastically deformed when being inserted into the socket end so as to be expanded again when reaching the groove, in which it is then retained by the holding element, which is more rigid than the sealing element.

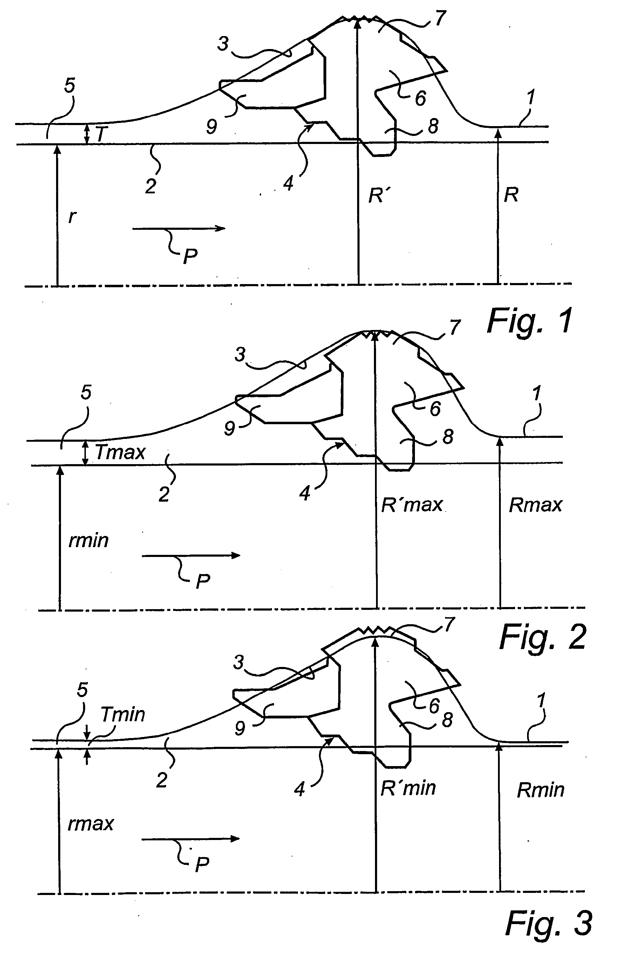

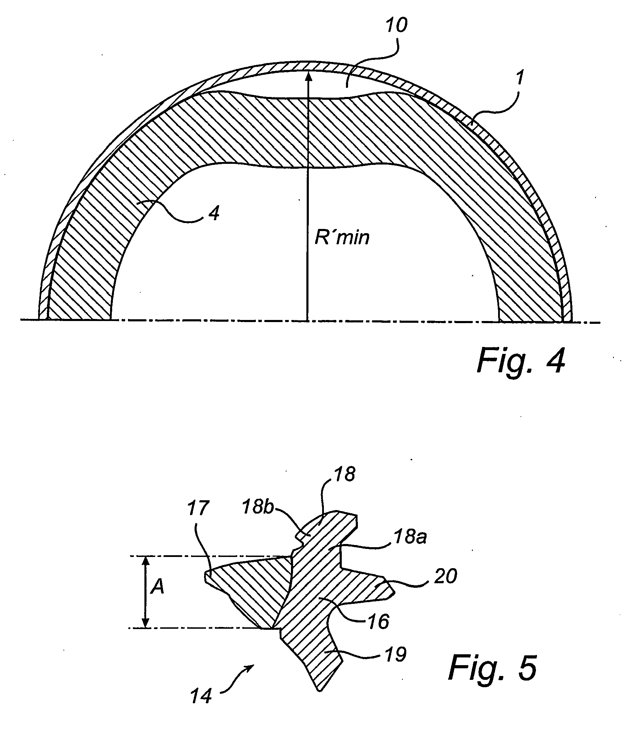

A prior-art sealing ring of this type will now be described in more detail with reference to Figs 1-4. Figs 1-3 are partial longitudinal sections and schematically illustrate the prior-art sealing ring arranged in an inside groove in a socket end, in which a spigot end is inserted, the sealing ring being shown in its state of rest. Fig. 4 is a schematic cross-sectional view and illustrates the socket end with the sealing ring inserted, the sealing ring being shown in a compressed and deformed state for the case illustrated in Fig. 3.

Figs 1-4 illustrate most schematically a portion of a socket end 1 of a first tube element and a spigot end 2 of a second tube element, the spigot end being concentrically inserted in the socket end 1 in the direction of arrow P. The socket end 1 has a circumferential inside groove 3 for receiving a prior-art sealing ring 4 for sealing the annular gap 5 between the socket end 1 and the spigot end 2.

Due to the manufacturing tolerances of the two tube elements and, thus, the socket end 1 and the spigot end 2, the gap width of the gap 5 may vary. The variation of the gap width may be considerable when the tube elements are made of, for instance, cast iron, while it is significantly smaller when the tube elements are made of plastic. It should be noted that, for reasons of clarity, the variation of the gap width is considerably exaggerated in Figs 1-3.

Fig. 1 shows the nominal gap width T, which is obtained when the inner radius of the socket end 1 equals the nominal inner radius R and the outer radius of the socket end 2 equals the nominal outer radius r. The radius of the groove 3 at the bottom of the groove is R'.

Fig. 2 shows the maximum gap width Tmax which can exist with existing manufacturing tolerances, the inner radius of the socket end 1 having its maximum value Rmax and the outer radius of the spigot end 2 having its minimum value rmin. The radius of the groove 3 at the bottom of the groove has its maximum value R'max.

Fig. 3 shows the minimum gap width Tmin which can exist with existing manufacturing tolerances, the inner radius of the socket end 1 having its minimum value Rmin and the outer radius of the spigot end 2 having its maximum value rmax. The radius of the groove 3 at the bottom of the groove has its minimum value R'min.

The prior-art sealing ring 4 comprises an annular sealing element 6 of rubber material with a first sealing part 7 for sealing against the inner face of the socket end 1 in the groove 3 and a second sealing part 8 for sealing against the outer face of the spigot end 2. As is evident from Figs 1-3, the first sealing part 7 has an outer shape which is adjusted to the shape of the groove 3, while the second sealing part 8 has the shape of a sealing lip, which is slightly inclined in the direction P along which the spigot end 2 is inserted into the socket end 1.

The prior-art sealing ring 4 also comprises an annular holding element 9 which is connected to the sealing element 6 and positioned at the side of the sealing element 6 from which the spigot end 2 is inserted into the socket end 1, and which is arranged to abut against one groove wall of the groove 3. The holding element 9 is made of a plastic material, which is more rigid than the rubber material of which the sealing element 6 is made, and is so elastically deformable as to allow insertion of the sealing ring 4 into the groove 3. The holding element 9 retains the sealing ring 4 in the groove 3.

As shown in Figs 1-3, in which the sealing ring 4 is illustrated in its state of rest, that is in a non-compressed state, the outer radius of the first sealing part 7 is insignificantly greater than R'max (see Fig. 2), which allows it to seal against the bottom of the groove 3 in the case shown in Fig. 2 with a maximum gap width Tmax. In this case, the first sealing part 7 is thus slightly compressed when the sealing ring 4 is inserted in the groove 3. In the case shown in Fig. 1 with a nominal gap with T, the first sealing part 7 is further compressed (since R'< R'max) when the sealing ring 4 is inserted in the groove 3. In the case shown in Fig. 3, in which the radius of the groove 3 at the bottom of the groove has its minimum value R'min, it is possible, if the tube elements are made of, for instance, cast iron and thus the manufacturing tolerances are great, for R'min to be so much smaller than R'max that the sealing part 7 cannot take up the difference in radius by being compressed. In this case such a deformation of the sealing ring 4 occurs that it is "crumpled up" and loses its circular shape and, thus, does not provide a proper seal against the inner face of the socket end 1 along its entire circumference. Moreover correct insertion of the spigot end 2 into the socket end 1 can be prevented. This is illustrated in Fig. 4, from which it is evident that the sealing ring 4 in some parts of its circumference does not seal against the inner face of the socket end.1 but allows free passages 10 at the socket end 1.

If, for the purpose of preventing this "crumpling up", the outer radius of the first sealing part 7 was made smaller than R'max, for instance was made only insignificantly greater than R', that is the nominal radius of the groove 3 at the bottom of the groove, no sealing abutment against the bottom of the groove would be obtained in the case shown in Fig. 2.

### Summary of the Invention

The object of the present invention is therefore to provide a sealing ring, which eliminates the above-described drawback and establishes a perfect seal against the inner face of a socket end also when there are great manufacturing tolerances, such as for tube elements of cast iron, in which case the sealing ring is retained in a safe manner in the groove of the socket end even when it is subjected to high pressure.

According to the present invention, this object is achieved by a sealing ring, which is of the type stated by way of introduction and characterised in that the first sealing part has a neck portion, which is positioned radially outside the holding element and which supports a radially outer head portion, which is positioned radially outside the holding element and whose outer radius is slightly greater than R'max, the first sealing part being, at the level of the neck portion, bendable in the axial direction along which the spigot end is to be inserted into the socket end, and the cross-section of the annular holding element has a radial extent which is greater than 2 x Tmax.

In a preferred embodiment, the radially outer face of the head portion has, over the major part of its axial extent, a diameter increasing in the direction of insertion of the spigot end.

The holding element is suitably positioned at the side of the sealing element from which the spigot end is to be inserted into the socket end.

In a preferred embodiment, the sealing ring comprises a third sealing part which is axially opposite the holding element and adapted to seal against the inner face of the socket end, said third sealing part and the holding element being each arranged to abut against one of the axially spaced-apart groove walls of the groove.

The sealing element is suitably made of a rubber material and the holding element is suitably made of a plastic material.

### Brief Description of the Drawings

The invention will now be described in more detail with reference to the accompanying drawings.
Figs 1-3 are partial longitudinal sections and schematically illustrate the above-described prior-art sealing ring arranged in an inside groove in a socket end, in which a spigot end is inserted, the sealing ring being illustrated in its state of rest.
Fig. 4 is a schematic cross-sectional view and illustrates the socket end with the sealing ring inserted, the sealing ring being shown in a compressed and deformed state for the case shown in Fig. 3.
Fig. 5 is a cross-sectional view of a sealing ring according to the invention.
Figs 6-8 are partial longitudinal sections and schematically illustrate the sealing ring according to Fig. 5 arranged in an inside groove in a socket end, in which a spigot end is inserted, the sealing ring being shown in its state of rest.
Fig. 9 is a partial longitudinal section and illustrates the sealing ring according to Fig. 5 in its state fitted into the groove before insertion of the spigot end into the socket end.
Fig. 10 is a longitudinal section corresponding to Fig. 9, however illustrating the sealing ring in its state fitted into the groove after insertion of the spigot end into the socket end.

### Description of a Preferred Embodiment

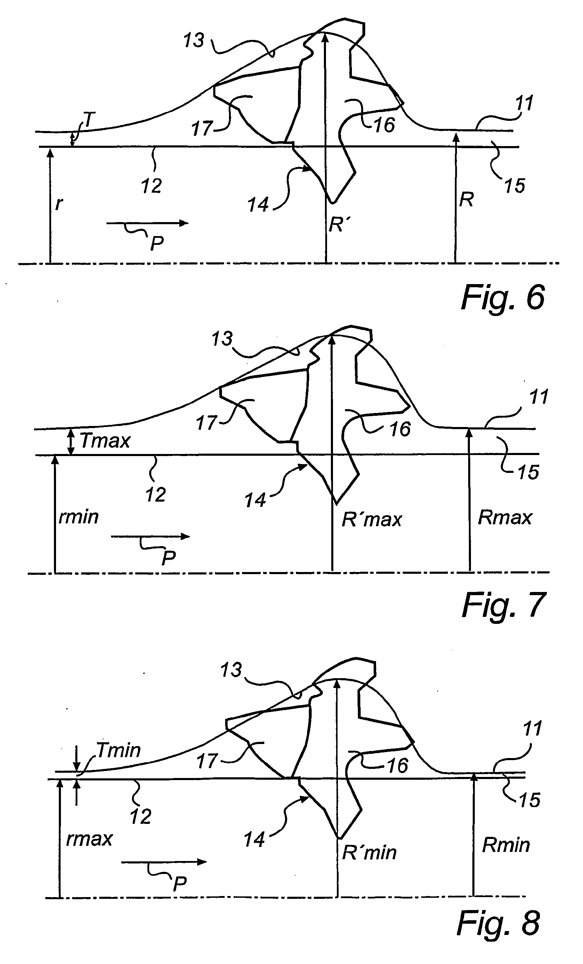

Figs 6-8 schematically illustrate a portion of a socket end 11 of a first tube element and a spigot end 12 of a second tube element, the spigot end being inserted into the socket end 11 in the direction of arrow P. The socket end 11 has a circumferential inside groove 13 for receiving a sealing ring 14 according to the invention for sealing the annular gap 15 between the socket end 11 and the spigot end 12.

Due to the manufacturing tolerances of the two tube elements and, thus, the socket end 11 and the spigot end 12, the gap width of the gap 15 may vary. As mentioned above, the variation of the gap width may be considerable when the tube elements, like in this case, are made of cast iron, while it is significantly smaller when the tube elements are made of, for instance, plastic. It should be noted that, for reasons of clarity, Figs 6-8 like Figs 1-3 illustrate the variation of the gap width in a considerably exaggerated manner.

Fig. 6 illustrates, like Fig. 1, the nominal gap width T, which is obtained when the inner radius of the socket end 11 equals the nominal inner radius R and the outer radius of the spigot end 12 equals the nominal outer radius r. The radius of the groove 13 at the bottom of the groove is R'.

Fig. 7 illustrates, like Fig. 2, the maximum gap width Tmax which can exist with existing manufacturing tolerances, the inner radius of the spigot end 11 having its maximum value Rmax and the outer radius of the spigot end 12 having its minimum value rmin. The radius of the groove 13 at the bottom of the groove has its maximum value R'max.

Fig. 8 shows, like Fig. 3, the minimum gap width Tmin which can exist with existing manufacturing tolerances, the inner radius of the socket end 11 having its minimum value Rmin and the outer radius of the spigot end 12 having its maximum value rmax. The radius of the groove 13 at the bottom of the groove has its minimum value R'min.

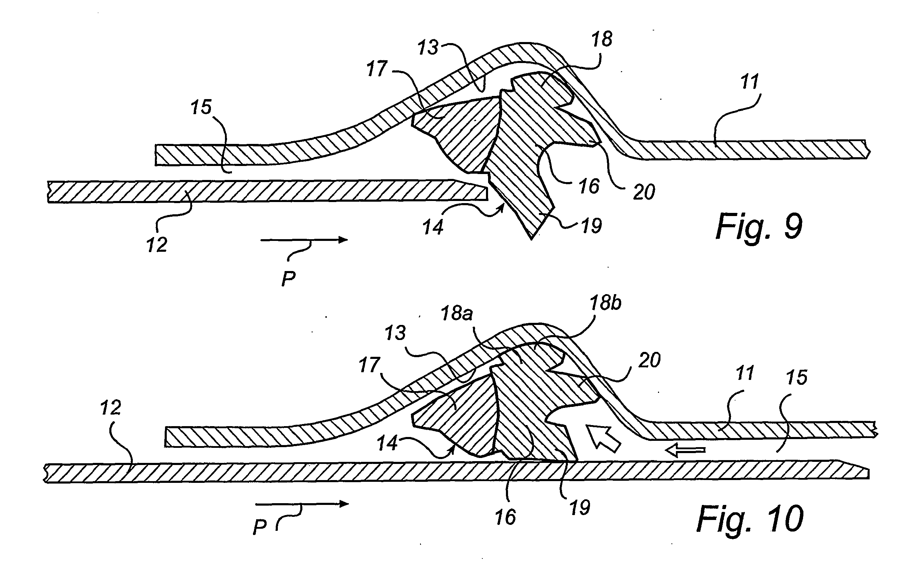

The sealing ring 14 comprises an annular sealing element 16 of rubber material and an annular holding element 17 which is connected to the sealing element and made of a plastic material, such as propene plastic, which is harder and more rigid than the rubber material of which the sealing element 16 is made. The holding element 17 is positioned at the side of the sealing element 16 from which the spigot end 12 is inserted in the direction P into the socket end 11. The annular holding element 17 is so elastically deformable as to allow insertion of the sealing ring 14 into the groove 13. When the sealing ring 14 is to be inserted into the groove 13, it is first slightly squeezed, after which, when positioned just in front of the groove, it is expanded elastically to come into abutment against the bottom of the groove 13. The holding element 17, which, with the sealing ring 14 inserted in the groove 13, abuts against one wall of the groove (see Fig. 9), serves to retain the sealing ring 14 in the groove 13.

The sealing element 16 has a first sealing part 18 for sealing against the bottom of the circumferential groove 13 and a second sealing part 19 for sealing against the outer face of the spigot end 12 (see Fig. 10), which second sealing part 19 has the shape of a sealing lip, which is slightly inclined in the direction P along which the spigot end 12 is inserted into the socket end 11. The sealing element 16 also comprises a third sealing part 20 arranged axially opposite the holding element 17 and adapted to seal against the other wall of the groove 13 (see Fig. 10), which third sealing element 20 has the shape of a sealing lip oriented substantially in the direction of insertion P of the spigot end 12.

The first sealing part 18, which is oriented substantially radially outwards, has a neck portion 18a, which supports a radially outer head portion 18b, which is positioned radially outside the holding element 17 and whose outer radius is somewhat greater than R'max (see Fig. 7). The radially outer face of the head portion 18b has, over the major part of its axial extent, a radius increasing in the direction of insertion P of the spigot end 12. This radius increases to a radius, which equals said outer radius of the head portion 18b, that is the greatest radius seen over the axial extent of the head portion 18b.

At the level of the neck portion 18a, the first sealing part 18 is bendable in the direction of insertion P of the spigot end 12 into the space that exists between the first sealing part 18 and the third sealing part 20. As a result, the sealing ring 14 will not be crumpled up in the way shown in Fig. 4 but retains its circular shape and establishes a circumferential seal against the inner face of the socket end 12 even in the case when the radius of the groove 13 takes its minimum value R'min within the manufacturing tolerances.

Fig. 10 illustrates by arrows the inner pressure prevailing in the piping (for instance a high-pressure system for drinking water) in which the tube elements provided with the socket end 11 and the spigot end 12 are included. As will be seen, the annular sealing element 16 of the sealing ring 14 is designed so that the interior pressure forces the sealing lips 19 and 20 into abutment against the outer face of the spigot end 12 and the wall of the groove 13, respectively, and thus "reinforces" the seal. It should also be noted that the design of the first sealing part 18 with a neck portion 18a and a head portion 18b allows the sealing ring 14 to remain in sealing abutment against the bottom of the groove 13 and the outer face of the spigot end 12 also when a relatively high exterior pressure prevails in the gap 15 (to the left in Fig. 10) and the radius of the bottom of the groove is great.

As mentioned above, the purpose of the holding element 17 is to retain the sealing ring 14 in the groove 13, also when a high interior pressure prevails in the piping and the gap width of the gap 15 is at its maximum. To this end, the holding element 17 has a cross-sectional shape whose radial extent A is greater than 2 x Tmax.

## Claims

1. A sealing ring for sealing an annular gap (15) between an inner face of a socket end (11) of a first tube element and an outer face of a spigot end (12) of a second tube element, the socket end (11) having a circumferential inside groove (13) for receiving the sealing ring (14), which groove at its bottom has a radius, which due to the manufacturing tolerances of the first tube element is between a minimum value R'min and a maximum value R'max, and the spigot end (12) being concentrically insertable into the socket end (11) to form said gap (15) during compression of the sealing ring (14), said gap having a radial gap width, which due to the manufacturing tolerances of the two tube elements is between a minimum value Tmin and a maximum value Tmax, which sealing ring (14) has an annular sealing element (16) with a first sealing part (18) for sealing against the inner face of the socket end (12) in the bottom of the circumferential groove (13) and a second sealing part (19) for sealing against the outer face of the spigot end (12) and further has an annular holding element (17) which is connected to the sealing element (16) and which is more rigid than the sealing element (16) but so elastically deformable as to allow insertion of the sealing ring (14) into the groove (13),
**characterised in that**
the first sealing part (18) has a neck portion (18a), which is positioned radially outside the holding element (17) and which supports a radially outer head portion (18b), which is positioned radially outside the holding element (17) and whose outer radius is slightly greater than R'max, the first sealing part (18) being, at the level of the neck portion (18a), bendable in the axial direction (P) along which the spigot end (12) is to be inserted into the socket end (11), and the cross-section of the annular holding element (17) has a radial extent (A) which is greater than 2 x Tmax.

2. A sealing ring as claimed in claim 1, in which the radially outer face of the head portion (18b) has, over the major part of its axial extent, a diameter increasing in the direction of insertion (P) of the spigot end (12).

3. A sealing ring as claimed in claim 1 or 2, in which the holding element (17) is positioned at the side of the sealing element (16) from which the spigot end (12) is to be inserted into the socket end (11).

4. A sealing ring as claimed in claim 3, which comprises a third sealing part (20) which is axially opposite the holding element (17) and adapted to seal against the inner face of the socket end (11), said third sealing part (20) and the holding element (17) being each arranged to abut against one of the axially spaced-apart groove walls of the groove (13).

5. A sealing ring as claimed in any one of claims 1-4, in which the sealing element (16) is made of a rubber material and the holding element (17) is made of a plastic material.

## Patentansprüche

1. Dichtungsring zum Abdichten eines ringförmigen Spalts (15) zwischen einer inneren Fläche eines Steckmuffenendes (11) eines ersten Rohrelements und einer äußeren Fläche eines Stutzenendes (12) eines zweiten Rohrelements, wobei das Steckmuffenende (11) eine innenseitige Umfangsnut (13) zur Aufnahme des Dichtungsrings (14) hat, wobei die Nut an ihrem Boden einen Radius aufweist, welcher auf Grund der Herstellungstoleranzen des ersten Rohrelements zwischen einem minimalen Wert R'min und einem maximalen Wert R'max liegt, und das Stutzenende (12) konzentrisch in das Steckmuffenende (11) einschiebbar ist, um den Spalt (15) während des Zusammendrückens des Dichtungsrings (14) aufzubilden, wobei der Spalt eine radiale Spaltenbreite aufweist, welche auf Grund der Herstellungstoleranzen der zwei Rohrelemente zwischen einem minimalen Wert Tmin und einem maximalen Wert Tmax liegt, wobei der Dichtungsring (14) ein ringförmiges Dichtungselement (16) mit einem ersten Dichtungsteil (18) zum Abdichten gegen die innere Fläche des Steckmuffenendes (11) im Boden der Umfangsnut (13) und einen zweiten Dichtungsteil (19) zum Abdichten gegen die äußere Fläche des Stutzenendes (12) aufweist und des Weiteren ein ringförmiges Halteelement (17) besitzt, welches mit dem Dichtungselement (16) verbunden ist und welches steifer ist als das Dichtungselement (16), aber so elastisch verformbar, um das Einschieben des Dichtungsrings (14) in die Nut (13) zu gestatten,
**gekennzeichnet dadurch, dass**
der erste Dichtungsteil (18) einen Halsabschnitt (18a) aufweist, welcher radial außerhalb des Halteelements (17) positioniert ist und welcher einen radial äußeren Kopfabschnitt (18b) trägt, welcher radial außerhalb des Halteelements (17) positioniert ist und dessen äußerer Radius etwas größer als R'max ist, wobei der erste Dichtungsteil (18) auf dem Niveau des Halsabschnitts (18a) biegbar in der axialen Richtung (P) ist, entlang welcher das Stutzenende (12) in das Steckmuffenende (11) eingeschoben werden soll, und wobei der Querschnitt des ringförmigen Halteelements (17) ein radiales Ausmaß (A) aufweist, welches größer ist als 2 x Tmax.

2. Dichtungsring nach Anspruch 1, bei welchem die radial äußere Fläche des Kopfabschnitts (18b) über den größeren Teil seines axialen Ausmaβes einen Durchmesser aufweist, welcher in die Einschubrichtung (P) des Stutzenendes (12) zunimmt.

3. Dichtungsring nach Anspruch 1 oder 2, bei welchem das Halteelement (17) an der Seite des Dichtungselements (16) positioniert ist, von welchem aus das Stutzenende (12) in das Steckmuffenende (11) eingeschoben werden soll.

4. Dichtungsring nach Anspruch 3, welcher einen dritten Dichtungsteil (20) umfasst, der axial gegenüber dem Halteelement (17) liegt und so ausgelegt ist, um gegen die innere Fläche des Steckmuffenendes (11) abzudichten, wobei der dritte Dichtungsteil (20) und das Halteelement (17) jeweils so angeordnet sind, um gegen eine der axial beabstandeten Nutwände der Nut (13) zu stoßen.

5. Dichtungsring nach jedem beliebigen der Ansprüche 1-4, bei welchem das Dichtungselement (16) aus einem Gummimaterial hergestellt ist und das Halteelement (17) aus einem Kunststoffmaterial hergestellt ist.

## Revendications

1. Bague d'étanchéité pour l'étanchéité d'un espace annulaire (15) entre une face intérieure d'une extrémité de douille (11) d'un premier élément de tube et une face extérieure d'une extrémité de bout mâle (12) d'un deuxième élément de tube, l'extrémité de douille (11) possédant une rainure intérieure circonférentielle (13), destinée à recevoir la bague d'étanchéité (14), laquelle rainure possède au fond un rayon qui, en raison des tolérances de fabrication du premier élément de tube, est compris entre une valeur minimale R'min et une valeur maximale R'max, et l'extrémité du bout mâle (12) pouvant être insérée concentriquement dans l'extrémité de douille (11), pour former ledit espace (15) pendant la compression de la bague d'étanchéité (14), ledit espace présentant une largeur d'espace radial qui, en raison des tolérances de fabrication des deux éléments de tube, est comprise entre une valeur minimale Tmin et une valeur maximale Tmax, laquelle bague d'étanchéité (14) comporte un élément d'étanchéité annulaire (16), avec une première pièce d'étanchéité (18) destinée à s'appliquer contre la face intérieure de l'extrémité de douille (11) au fond de la rainure circonférentielle (13), et une deuxième pièce d'étanchéité (19), destinée à s'appliquer contre la face extérieure de l'extrémité de bout mâle (12) et possédant en outre un élément de maintien annulaire (17), qui est relié à l'élément d'étanchéité (16) et qui est plus rigide que l'élément d'étanchéité (16), mais élastiquement déformable de manière à permettre l'insertion de la bague d'étanchéité (14) dans la rainure (13),
**caractérisé en ce que**
la première pièce d'étanchéité (18) possède une portion de col (18a) positionnée radialement à l'extérieur de l'élément de maintien (17) et supportant une portion de tête (18b) positionnée radialement à l'extérieur de l'élément de maintien (17), et dont le rayon extérieur est légèrement supérieur à R'max, la première pièce d'étanchéité (18) pouvant, au niveau de la portion de col (18a), être courbée dans le sens axial (P), dans lequel l'extrémité de bout mâle (12) est censée être insérée dans l'extrémité de douille (11), et la section transversale de l'élément de maintien annulaire (17) possède une extension radiale (A) supérieure à 2 x Tmax.

2. Bague d'étanchéité selon la revendication 1, dans laquelle la face radialement extérieure de la portion de tête (18b) présente, sur la majeure partie de son extension radiale, un diamètre augmentant dans le sens d'insertion (P) de l'extrémité de bout mâle (12).

3. Bague d'étanchéité selon la revendication 1 ou 2, dans laquelle l'élément de maintien (17) est positionné sur le côté de l'élément d'étanchéité (16) duquel l'extrémité de bout mâle (12) est censée être insérée dans l'extrémité de douille (11).

4. Bague d'étanchéité selon la revendication 3, comprenant une troisième pièce d'étanchéité (20), axialement opposée à l'élément de maintien (17) et adaptée pour s'appliquer contre la face intérieure de l'extrémité de douille (11), ladite troisième pièce d'étanchéité (20) et l'élément de maintien (17) étant conçus pour buter chacun contre l'une des parois axialement espacées de la rainure (13).

5. Bague d'étanchéité selon l'une quelconque des revendications 1 à 4, dans laquelle l'élément d'étanchéité (16) est constitué d'une matière à base de caoutchouc, et l'élément de maintien (17) est constitué d'une matière plastique.
